(19) Europäisches Patentamt / European Patent Office / Office européen des brevets

(11) **EP 4 455 340 A1**

(12) **EUROPEAN PATENT APPLICATION**
published in accordance with Art. 153(4) EPC

(43) Date of publication:
**30.10.2024 Bulletin 2024/44**

(21) Application number: **22911827.8**

(22) Date of filing: **19.12.2022**

(51) International Patent Classification (IPC):
*C22C 38/04* $^{(2006.01)}$     *C22C 38/06* $^{(2006.01)}$
*C22C 38/02* $^{(2006.01)}$     *C22C 38/12* $^{(2006.01)}$
*C22C 38/00* $^{(2006.01)}$     *C21D 8/02* $^{(2006.01)}$
*C23C 2/06* $^{(2006.01)}$

(52) Cooperative Patent Classification (CPC):
**C21D 8/02; C22C 38/00; C22C 38/02; C22C 38/04; C22C 38/06; C22C 38/12; C23C 2/06**

(86) International application number:
**PCT/KR2022/020758**

(87) International publication number:
**WO 2023/121194 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021 KR 20210183663**

(71) Applicant: **POSCO Co., Ltd**
**Pohang-si, Gyeongsangbuk-do 37859 (KR)**

(72) Inventors:
• **JO, Minho**
  **Pohang-si, Gyeongsangbuk-do 37859 (KR)**
• **HONG, Young-Kwang**
  **Pohang-si, Gyeongsangbuk-do 37859 (KR)**

(74) Representative: **Meissner Bolte Partnerschaft mbB**
**Patentanwälte Rechtsanwälte**
**Postfach 86 06 24**
**81633 München (DE)**

(54) **COLD-ROLLED STEEL SHEET HAVING EXCELLENT STRENGTH AND ELONGATION AND METHOD FOR MANUFACTURING SAME**

(57)    A cold-rolled steel sheet having improved strength and elongation, according to one embodiment of the present invention, comprises, in weight%: 0.04-0.08% of C; 0.05% or less (excluding 0%) of Si; 0.1-0.6% of Mn; 0.02-0.06% of Al; 0.015% or less (excluding 0%) of P; 0.015% or less (excluding 0%) of S; 0.006% or less (excluding 0%) of N; 0.02-0.04% of Nb; and the remainder of Fe and other inevitable impurities, wherein the cold-rolled steel sheet has a component reinforcement index defined by expression 1 of 470 or less, a crystal grain aspect ratio defined by expression 2 of 2.15 or less, and a composite reinforcement index defined by expression 3 of 500 to 600.

Processed by Luminess, 75001 PARIS (FR)

**Description**

**[Technical Field]**

An exemplary embodiment of the present disclosure relates to a cold-rolled steel sheet having excellent workability and a method for manufacturing the same. More particularly, an exemplary embodiment of the present disclosure relates to a cold-rolled steel sheet which has both excellent strength and workability and is appropriate for manufacturing parts requiring durability and complex molding, and a method for manufacturing the same.

**[Background Art]**

As containers for storing beverage or food, steel materials, plastics, glass, paper, aluminum, or the like is being used.

Among them, since steel materials are much less expensive than other materials, they are most widely used after plastics and aluminum. However, since plastics and aluminum are complicated to recover and expensive to regenerate, recently, steel materials are gaining more attention as a material of containers in terms of recycling of resources.

These steel materials are mostly used after being worked into a tin (Sn)-plated can shape for storing food or beverage.

Since cans for food or beverage are small, they should be easy to transport and have no damage during movement. Therefore, a steel material for cans is required to have good workability for working into a desired shape and also have high strength enough to maintain the shape even with a small thickness.

In recent years, since commercially available cans are also required to have aesthetics and functionality and need complex molding, high workability is required for steel materials. For example, when a body of a can is molded, a material having low workability should have a straight form, but when the material has sufficient workability, additional durability may be structurally secured by adding beads to a body area of the can during molding. In addition, since a material having low workability may not be used in parts requiring complex molding such as an easy-open-end (EOE) part of a can, when the steel material secures workability, it may be applied to a wider variety of parts.

In addition, a material for cans continues to get thinner in order to reduce material usage when it is manufactured into cans. However, when the material becomes thinner, it is not easy to maintain a desired shape. Therefore, in order to overcome the problem, the steel material used for cans requires to have increasingly higher strength.

However, when a steel sheet for cans has high strength, its elongation tends to be naturally decreased. Therefore, there is a problem in that the steel sheet should have both high strength and increased elongation, which are difficult to be compatible. Furthermore, when a material having excessively high strength is molded, high working force is needed, which easily wears out a mold, and thus, it should also be considered that the strength is not increased beyond a degree needed for punching.

For example, in order to use a general low carbon steel as a can material, a method of improving strength by work hardening by performing secondary rolling after recrystallization annealing is known, but when secondary rolling for improving strength is performed, elongation is greatly lowered in response.

As another example, a method of improving strength by solid solution strengthening by adding a large amount of N instead of lowering a secondary rolling reduction rate is known in the art. However, the method has a problem in that since N is interstitial element, when it is added in a large amount, a deviation may easily occur in components in a steel material, and when a deviation occurs in components, a deviation is inevitably likely to occur also in steel material quality.

As another example, a method of greatly improving strength using precipitation strengthening by adding Ti instead of lowering a secondary rolling reduction rate is known. However, when Ti is added to a steel material, inclusions are formed a lot in a steel making process due to high affinity of Ti for oxygen, which may become a starting point of cracks during molding into a can, and thus, efforts to remove the inclusions are further required.

As described above, a need for improvement in characteristics which are difficult to be compatible with each other for a steel material for use as a material for cans, that is, improvement in both strength and elongation, is increasing.

**[Disclosure]**

**[Technical Problem]**

The present disclosure attempts to provide a cold-rolled steel sheet having excellent strength and elongation and a method for manufacturing the same. More specifically, the present disclosure attempts to provide a cold-rolled steel sheet which has both excellent strength and elongation and may be used as a material for cans, and a method for manufacturing the same.

**[Technical Solution]**

An exemplary embodiment of the present disclosure provides a cold-rolled steel sheet having excellent strength and elongation including, by weight: 0.04 to 0.08% of C; 0.05% or less (excluding 0%) of Si; 0.1 to 0.6% of Mn; 0.02 to 0.06% of Al; 0.015% or less (excluding 0%) of P; 0.015% or less (excluding 0%) of S; 0.006% or less (excluding 0%) of N; 0.02 to 0.04% of Nb; and the remainder of Fe and other inevitable impurities, wherein the cold-rolled steel sheet has a component reinforcement index defined by the following [Expression 1] of 470 or less:

Component reinforcement index = 160 + 1,000C + 100Mn + 5,000Nb         [Expression 1]:

wherein C, Mn, and Nb denote wt% of each component.

The cold-rolled steel sheet having excellent strength and elongation according to an exemplary embodiment of the present disclosure may have a crystal grain aspect ratio defined by the following [Expression 2] of 2.15 or less:

Crystal grain aspect ratio = average value of [(crystal grain major axis length)/(crystal grain minor axis length)].         [Expression 2]:

The cold-rolled steel sheet having excellent strength and elongation according to an exemplary embodiment of the present disclosure may have a composite reinforcement index defined by the following [Expression 3] of 500 to 600:

Composite reinforcement index = [Expression 1] + ([Expression 2] - 1.8) × 600.         [Expression 3]:

The cold-rolled steel sheet having excellent strength and elongation according to an exemplary embodiment of the present disclosure may preferably have a yield strength of 500 to 600 MPa and an elongation of 8% or more.

The cold-rolled steel sheet having excellent strength and elongation according to an exemplary embodiment of the present disclosure may further include a plating layer on one or both surfaces of the cold-rolled steel sheet, wherein the plating layer may be plated with tin, a tin alloy, or chromium with a thickness of 5 μm or less.

An exemplary embodiment of the present disclosure provides a method for manufacturing a cold-rolled steel sheet having excellent strength and elongation including: slab preparation of preparing a slab which include, by weight: 0.04 to 0.08% of C; 0.05% or less (excluding 0%) of Si; 0.1 to 0.6% of Mn; 0.02 to 0.06% of Al; 0.015% or less (excluding 0%) of P; 0.015% or less (excluding 0%) of S; 0.006% or less (excluding 0%) of N; 0.02 to 0.04% of Nb; and the remainder of Fe and other inevitable impurities, and has a component reinforcement index defined by the following [Expression 1] of 470 or less and reheating the slab; hot rolling the slab and finish hot rolling the slab at Ar3 or higher to manufacture a hot rolled steel sheet; winding the hot rolled steel sheet at 560 to 700°C; cold rolling the wound hot rolled steel sheet at a reduction rate of 80 to 95% to manufacture a cold-rolled steel sheet; annealing the cold-rolled steel sheet at a temperature of 720 to 800°C; and secondary rolling the annealed cold-rolled steel sheet:

Component reinforcement index = 160 + 1,000C + 100Mn + 5,000Nb         [Expression 1]:

wherein C, Mn, and Nb denote wt% of each component.

In the method for manufacturing a cold-rolled steel sheet having excellent strength and elongation according to an exemplary embodiment of the present disclosure, the slab is preferably heated at 1,150°C or higher.

In the method for manufacturing a cold-rolled steel sheet having excellent strength and elongation according to an exemplary embodiment of the present disclosure, the secondary rolling is preferably rolled at a reduction rate of 4 to 10%.

The cold-rolled steel sheet manufactured after the secondary rolling as such may have a crystal grain aspect ratio defined by the following [Expression 2] of 2.15 or less:

Crystal grain aspect ratio = average value of [(crystal grain major axis length)/(crystal grain minor axis length)].         [Expression 2]:

Further, the cold-rolled steel sheet manufactured after the secondary rolling as such may have a composite reinforcement index defined by the following [Expression 3] of 500 to 600.

The method for manufacturing a cold-rolled steel sheet having excellent strength and elongation according to an exemplary embodiment of the present disclosure may further form a plating layer by performing hot-dip plating or electroplating on one or both surfaces of the manufactured cold-rolled steel sheet.

The plating layer may be plated with tin, a tin alloy, or chromium with a thickness of 5 μm or less.

**[Advantageous Effects]**

According to an exemplary embodiment of the present disclosure, a cold-rolled steel sheet which has both excellent strength and elongation and may be used as a material for cans may be provided.

According to an exemplary embodiment of the present disclosure, a cold-rolled steel sheet which is easily used in parts such as a bead molded body and an EOE of a can by plating tin or a tin alloy on a steel sheet for cans to exert a high yield strength of 500 to 600 MPa and an elongation of 8% or more may be provided.

**[Mode for Invention]**

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

In addition, unless particularly mentioned, % refers to wt%, and 1 ppm is 0.0001 wt%.

The meaning of further including an additional element in an exemplary embodiment of the present disclosure is including the additional element by replacing iron (Fe) as a remainder by the additional amount of the additional element.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, an exemplary embodiment of the present disclosure will be described in detail so that those skilled in the art to which the present disclosure pertains may easily carry out the disclosure. As those skilled in the art would realize, the described embodiments may be modified in various different ways, all without departing from the spirit or scope of the present disclosure.

An exemplary embodiment of the present disclosure relates to a cold-rolled steel sheet for cans which is manufactured into a can by molding after tin plating, and the material for such purpose should have not only excellent strength but also high elongation for securing workability. To this end, there is a need to provide a steel sheet having optimized balance between strength and elongation and a method for manufacturing the same, considering an increase in strength and also elongation decreased by the increased strength. In addition, a method for increasing productivity by minimizing a load during a steel making process is also considered.

The present inventors confirmed that in order to meet the needs, a cold-rolled steel sheet for cans may be provided by controlling the type and content of alloy elements in detail and optimizing manufacturing process conditions to secure desired levels of both strength and elongation, thereby completing the present disclosure.

The cold-rolled steel sheet having both excellent strength and elongation according to an exemplary embodiment of the present disclosure includes, by weight: 0.04 to 0.08% of C; 0.05% or less (excluding 0%) of Si; 0.1 to 0.6% of Mn; 0.02 to 0.06% of Al; 0.015% or less (excluding 0%) of P; 0.015% or less (excluding 0%) of S; 0.006% or less (excluding 0%) of N; 0.02 to 0.04% of Nb; and the remainder of Fe and other inevitable impurities.

Hereinafter, first, the component composition of the cold-rolled steel sheet provided in an exemplary embodiment of the present disclosure will be described in detail. Herein, unless otherwise particularly stated, the content of each component is % by weight.

[Carbon (C): 0.04 to 0.08 wt%]

When the content of C is low, the cold-rolled steel sheet has low strength and is difficult to use as a structural material, and in order to excessively lower the content, a refining process is further needed to decrease productivity, and thus, C may be included at 0.04 wt% or more. Though C may effectively increase strength with a small content, but when it is excessively included, workability may be greatly decreased, and thus, the upper limit may be limited to 0.08 wt% or less. More specifically, C may be included at 0.05 to 0.07 wt%.

[Silicon (Si): 0.05 wt% or less (excluding 0%)]

Since Si is an element which may be used as a decarburizer and may contribute to improving strength by solid solution strengthening, it is difficult to completely exclude Si. However, when Si is excessively included, a Si-based oxide is produced on the surface during annealing to cause defects during plating, thereby decreasing plateability. Therefore, taking this into consideration, the upper limit may be limited to 0.05 wt% or less. More specifically, Si may be included at 0.005 to 0.03 wt%.

[Manganese (Mn): 0.10 to 0.60 wt%]

Mn is an element which is bonded to solid-solubilized S in steel and precipitated as MnS to prevent hot shortness by solid-solubilized S. In order to achieve the effect, Mn may be included at 0.1 wt% or more. In addition, Mn is solid-solubilized in steel and has an effect of increasing the strength of steel with C. However, when it is excessively included, the workability of steel is deteriorated, and thus, it may be limited to 0.6 wt% or less. In addition, since there are many standards which regulate the content of Mn to 0.6 wt% or less for a steel material for food pipes, when the content exceeds the range, it may be problematic with its use for such purpose. More specifically, Mn may be included at 0.30 to 0.60 wt%.

[Aluminum (Al): 0.02 to 0.06 wt%]

Al is an element having a very large deoxidizing effect and reacts with N in steel to precipitate AlN, thereby preventing deterioration of moldability by solid-solubilized N. Therefore, Al may be included at 0.02 wt% or more. However, when Al is added in a large amount, ductility is rapidly deteriorated, and thus, the content may be limited to 0.06 wt% or less. More specifically, Al may be included at 0.02 to 0.05 wt%.

[Phosphorus (P): 0.015 wt% or less (excluding 0%)]

P is an element which may increase strength without greatly decreasing steel ductility when added at a certain amount or less, but when it is added in excess of 0.015 wt%, it is segregated in a crystal grain boundary, excessively hardens steel, and decreases elongation, and thus, it may be limited to 0.015 wt% or less. More specifically, P may be included at 0.015 wt% or less. More specifically, P may be included at 0.003 to 0.010 wt%.

[Sulfur (S): 0.015 wt% or less (excluding 0%)]

Since S is an element which causes hot shortness during solid solubilization, MnS precipitation may be induced by adding Mn. As S is more included, Mn in the level corresponding thereto should be further added, and thus, it is not preferred to add S at or more than the limited range. Therefore, the upper limit of S may be limited to 0.015 wt%. More specifically, S may be included at 0.003 to 0.010 wt%.

[Nitrogen (N): 0.006 wt% or less (excluding 0%)]

Though N is included in steel as an evitable element, N which exists in a solid-solubilized state causes aging to greatly deteriorate workability. In order to minimize ductility deterioration by occurrence of aging, it is preferred to limit the upper limit to 0.0060 wt% or less. More specifically, N may be included at 0.0015 to 0.0050 wt%.

[Niobium (Nb): 0.02 to 0.04%]

Nb is bonded to C and precipitated as fine NbC to exert a precipitation strengthening effect. In order to have the precipitation strengthening effect as such, Nb needs to be added at 0.02% or more. However, when NbC is excessively formed, recrystallization during annealing after cold rolling is suppressed, so that annealing at a high temperature is needed. Since a material for cans is thinly rolled to a thickness of 0.4 mm or less, when annealing is performed at a high temperature, plate fracture and the like may occur. Therefore, it is preferred that the content of Nb is limited to 0.02 to 0.04%.

The present inventors found that in the steel sheet according to an exemplary embodiment of the present disclosure, the strength of a hot rolled steel sheet manufactured from a range for each component is proportional to a component reinforcement index defined from the following [Expression 1]:

Component reinforcement index = 160 + 1,000C + 100Mn + 5,000Nb ---

[Expression 1]

wherein C, Mn, and Nb denote wt% of each component.

When the component reinforcement index of [Expression 1] is more than 470, the strength of the steel sheet is high, so that cold rolling is difficult, and thus, it is preferred that the component reinforcement index defined by [Expression 1] limits the contents of C, Mn, and Nb within a range not exceeding 470. In addition, when the component reinforcement index of [Expression 1] is less than 350, the strength of steel is low and a high secondary reduction amount is needed to secure it, but elongation is greatly decreased accordingly, and thus, it is preferred that the lower limit value of [Expression 1] is limited.

The component reinforcement index of [Expression 1] according to an exemplary embodiment of the present disclosure is recursively derived through an experiment within the range of the components of the present disclosure, and may not be applied outside the range of the components.

It is preferred that the remainder other than the composition includes Fe and inevitable impurities, and the steel material of the present disclosure does not exclude addition of other compositions. Since the inevitable impurities may be unintentionally incorporated from raw materials or surrounding environments in the common steel making manufacturing process, they may not be excluded. The inevitable impurities may be understood by those skilled in the art of steel making manufacture.

Hereinafter, the texture characteristics of the cold-rolled steel sheet having excellent strength and elongation according to an exemplary embodiment of the present disclosure will be described in detail.

The cold-rolled steel sheet having excellent strength and elongation according to an exemplary embodiment of the present disclosure may have a crystal grain aspect ratio defined by the following [Expression 2] of 2.15 or less:

Crystal grain aspect ratio = (average value of crystal grain major axis length)/(average value of crystal grain minor axis length)      [Expression 2].

Herein, the average length in a crystal grain major axis direction may be determined as an average value by measuring an average crystal grain diameter in a rolling direction (RD direction) and dividing an arbitrary length in the rolling direction by the number of crystal grains present in the corresponding length. Further, the average length of a crystal grain minor axis direction may be determined as an average value by measuring an average diameter of crystal grains in a thickness direction of a steel sheet and dividing a steel sheet thickness by the number of crystal grains present in the thickness.

When the crystal grain aspect ratio is too low, strength may be insufficient. Meanwhile, when the crystal grain aspect ratio is too high, elongation may be insufficient. Therefore, specifically, the crystal grain aspect ratio may be 1.80 to 2.15.

The cold-rolled steel sheet according to an exemplary embodiment of the present disclosure has a yield strength of the steel sheet which increases as a secondary rolling reduction rate increases, and in order to obtain a desired level of yield strength, it is preferred that a strengthening effect by components and a strengthening effect by secondary rolling are appropriately combined.

Therefore, it was found in an exemplary embodiment of the present disclosure that the composite reinforcement index defined by the following [Expression 3] is proportional to the yield strength of a steel sheet:

Composite reinforcement index = [Expression 1] + ([Expression 2] - 1.8) $\times$ 600      [Expression 3].

That is, the composite reinforcement index according to [Expression 3] is related to the component reinforcement index according to [Expression 1] and the crystal grain aspect ratio according to [Expression 2], and it is preferred that the composite reinforcement index value as such may be 500 to 600 according to [Expression 3] in order to obtain a yield strength of 500 to 600 MPa.

When the composite reinforcement index value is too small, the strength of the material is too low, so that it may be difficult to maintain a shape after molding. Further, when the composite reinforcement index value is too large, high force is required during work, so that work may be difficult and mold wear may become worse. Therefore, specifically, it is preferred that the composite reinforcement index value is 520 to 580.

As described above, the cold-rolled steel sheet according to an exemplary embodiment of the present disclosure has both excellent strength and elongation. Specifically, a yield strength may be 500 to 600 MPa, and an elongation may be 8.0% or more.

The plated steel sheet according to an exemplary embodiment of the present disclosure includes a plating layer disposed on the cold-rolled steel sheet or one or both surfaces of the cold-rolled steel sheet.

A metal included in the plating layer may be one or more of tin (Sn), a tin alloy (Sn-Ni, Sn-Co, Sn-Zn), or chromium (Cr).

Sn or a Sn alloy plating layer formed on the cold-rolled steel sheet as such is difficult to discolor in the air, has low toxicity to the human body, and is stable in organic acids of food or citrus fruits, and thus, may be intimately applied to household goods.

The tin or tin alloy plating layer may be plated at 5 $\mu$m or less by an electroplating method. When the tin or tin alloy plating layer is plated at 5 $\mu$m or more, plating layer adhesion is needed more than necessary for securing corrosion resistance, and economic feasibility is poor, which is not preferred. Therefore, it is preferred that the thickness of the plating layer is 0.1 to 3.5 $\mu$m.

A method for manufacturing a cold-rolled steel sheet having excellent strength and elongation according to an exemplary embodiment of the present disclosure includes: hot rolling a slab to manufacture a hot rolled steel sheet; winding the hot rolled steel sheet; cold rolling the hot rolled steel sheet to manufacture a cold-rolled steel sheet; and annealing the cold-rolled steel sheet.

Hereinafter, each step will be described in detail.

First, a slab is hot rolled to manufacture a hot rolled steel sheet.

Since the alloy composition of the slab is the same as that of the cold-rolled steel sheet described above, overlapping description will be omitted. Since the alloy component is not substantially changed during a cold-rolled steel sheet manufacturing process, the alloy compositions of the slab and the cold-rolled steel sheet are substantially the same.

Before hot rolling the slab, it may be reheated to a temperature of 1,150°C or higher. Since most of precipitates present in steel should be solid-solubilized again, a temperature of 1,150°C or higher may be needed. More specifically, the slab may be heated to 1,200°C or higher for solid-solubilizing the precipitates well.

A slowly cooled slab is finish hot rolled at a temperature of $Ar_3$ or higher to manufacture a hot rolled steel sheet. The reason for limiting the finish hot rolling temperature to $Ar_3$ or higher is for rolling in an austenite single phase area.

Though there are some differences depending on the content of component elements, since the $Ar_3$ temperature is a temperature understood by those skilled in the art of steel manufacture, detailed description will be omitted. More specifically, the finish rolling temperature may be 900°C or higher.

The hot rolled steel sheet is wound at 560 to 700°C. The precipitation of NbC may be affected by a winding temperature. That is, when the winding temperature is too low, NbC may not be precipitated well inside the steel sheet, and when the winding temperature is too high, NbC may not be precipitated well also. Therefore, the winding temperature of the hot rolled steel sheet according to an exemplary embodiment of the present disclosure may be 560 to 700°C. By limiting the winding temperature as such, NbC may be optimally precipitated and a desired level of strength may be secured. A preferred winding temperature may be 580 to 680°C.

It is preferred that the hot rolled steel sheet according to an exemplary embodiment of the present disclosure has a yield strength of 470 MPa or less. When the yield strength of the hot rolled steel sheet is more than 470 MPa or more, productivity of cold rolling is poor, and thus, it is preferred that the yield strength is limited as described above.

Next, hot rolled steel sheet is cold rolled.

The hot rolled steel sheet wound in a coil state is cold rolled at a reduction rate of 80 to 95% to manufacture a cold-rolled steel sheet. The reduction rate may determine a final thickness of the cold-rolled steel sheet and increase the strength of a steel sheet by work hardening during cold rolling. It is preferred that the thickness of the hot rolled steel sheet is 2.0 to 4.0 mm. In order to cold rolling the hot rolled steel sheet thinly to 0.4 mm or less, the reduction rate should be 80% or more. Therefore, it is preferred that a reduction rate of 80% or more is applied to the cold rolling according to an exemplary embodiment of the present disclosure. However, when the reduction rate of the cold rolling is 95% or more, strain resistance by rolling is excessively increased, so that rolling becomes difficult. Therefore, it is preferred that the reduction rate of the cold rolling is 80 to 95%.

Next, the cold-rolled steel sheet is annealed at a temperature of 720 to 800°C. An annealing temperature in an exemplary embodiment of the present disclosure is determined for removing internal stress accumulated in a steel sheet during cold rolling and appropriately securing workability. Thus, annealing needs to be performed at a sufficiently high annealing temperature so that recrystallization sufficiently occurs. Since a NbC precipitate has an effect of suppressing recrystallization, it is preferred to perform annealing at a temperature of 720°C or higher for overcoming it. However, when annealing is performed at 800°C or higher, the strength of the steel sheet is decreased at a high temperature and the steel sheet may be broken in the case of a thin steel sheet, and thus, the annealing may be performed at a temperature of 720 to 800°C.

Next, the annealed steel sheet is secondary rolled to manufacture a final steel sheet.

It is preferred that the secondary rolling is performed at a reduction rate of 4 to 10%. Since the steel sheet annealed under the conditions has insufficient strength, secondary rolling is performed in order to obtain a desired level of strength in an exemplary embodiment of the present disclosure. To this end, it is preferred that the secondary rolling is performed at a reduction rate of 4% or more. However, when the reduction rate is more than 10%, elongation is decreased, so that securing a required level of workability may not be guaranteed.

A plating layer is formed on one or both surface of the steel sheet manufactured by the above process. Metal included in the plating layer may be one or more of tin (Sn), a tin alloy (Sn-Ni, Sn-Co, Sn-Zn), or chromium (Cr).

When a tin plating layer is formed on the steel sheet according to an exemplary embodiment of the present disclosure, a reflow process at 200°C or higher or a dry heat treatment process after printing may be performed, and when the heating process is performed, steel sheet material quality may be changed. Through the process, generally a yield strength is increased and elongation is decreased. Results similar to the effect of material quality change may be obtained when a non-plated steel sheet is maintained at 200°C for 20 minutes. From the consumer's perspective, since strength and elongation after plating are important, it is preferred to measure final material quality of the steel sheet of the present disclosure after maintained at 200°C for 20 minutes.

Since the crystal grains of the steel sheet is elongated in a rolling direction by subjecting the annealed steel sheet to secondary rolling as described above, the crystal grain aspect ratio defined by [Expression 2] described above is increased.

Therefore, in order to secure the aspect ratio of [Expression 2] of 2.15 or less, secondary rolling is performed at a reduction rate of 4 to 10% which is a range of an exemplary embodiment of the present disclosure.

Further, as the reduction rate is increased in the secondary rolling, the yield strength of the steel sheet is increased. Therefore, in order to secure the yield strength at a level suggested in an exemplary embodiment of the present disclosure, it is preferred to appropriately combine and control the component reinforcement index of the steel sheet and the reinforcement effect by secondary rolling.

To this end, it is preferred that an exemplary embodiment of the present disclosure controls the composite reinforcement index by [Expression 3] to a range of 500 to 600.

Hereinafter, the present disclosure will be described in more detail by the examples. However, the examples are only illustrative of the present disclosure, and the present disclosure is not limited thereto.

Examples

Steels having the compositions of the following Table 1 were manufactured, and the components were indicated as actual values. Steel slabs including the compositions of Table 1 and Fe and inevitable impurities as the remainder were manufactured.

The slabs were reheated to 1,240°C, hot rolled at 900°C or higher to a thickness of 2 mm, and wound at a temperature of 620°C to manufacture hot rolled steel sheets. The hot rolled steel sheets were cold rolled to a reduction rate of 90% to manufacture cold-rolled steel sheets of 0.2 mm. Then, continuous annealing was performed under the conditions of maintaining the cold-rolled steel sheets at a temperature of 760°C for 40 seconds. The steel sheets annealed as such were secondary rolled, and the reduction rates of the secondary rolling at this time are shown together in Table 1.

(Table 1)

| Classification | Content of component (wt%) | | | | | | | | Secondary rolling reduction rate (%) |
|---|---|---|---|---|---|---|---|---|---|
| | C | Si | Mn | Al | P | S | N | Nb | |
| Inventive Steel 1 | 0.042 | 0.02 | 0.52 | 0.04 | 0.007 | 0.006 | 0.003 | 0.030 | 7.0 |
| Inventive Steel 2 | 0.058 | 0.02 | 0.49 | 0.04 | 0.007 | 0.005 | 0.003 | 0.031 | 7.0 |
| Inventive Steel 3 | 0.070 | 0.02 | 0.52 | 0.04 | 0.007 | 0.006 | 0.003 | 0.029 | 7.0 |
| Inventive Steel 4 | 0.079 | 0.02 | 0.52 | 0.04 | 0.006 | 0.006 | 0.003 | 0.031 | 7.0 |
| Inventive Steel 5 | 0.075 | 0.02 | 0.15 | 0.04 | 0.006 | 0.006 | 0.003 | 0.037 | 7.0 |
| Inventive Steel 6 | 0.067 | 0.02 | 0.30 | 0.04 | 0.007 | 0.006 | 0.003 | 0.035 | 7.0 |
| Inventive Steel 7 | 0.062 | 0.02 | 0.39 | 0.04 | 0.007 | 0.006 | 0.003 | 0.032 | 7.0 |
| Inventive Steel 8 | 0.062 | 0.02 | 0.47 | 0.04 | 0.007 | 0.006 | 0.003 | 0.029 | 7.0 |
| Inventive Steel 9 | 0.056 | 0.02 | 0.59 | 0.04 | 0.007 | 0.006 | 0.003 | 0.028 | 7.0 |
| Inventive Steel 10 | 0.078 | 0.02 | 0.55 | 0.04 | 0.007 | 0.006 | 0.003 | 0.023 | 7.0 |
| Inventive Steel 11 | 0.060 | 0.02 | 0.50 | 0.04 | 0.007 | 0.006 | 0.003 | 0.037 | 7.0 |

(continued)

| Classification | Content of component (wt%) | | | | | | | | Secondary rolling reduction rate (%) |
|---|---|---|---|---|---|---|---|---|---|
| | C | Si | Mn | Al | P | S | N | Nb | |
| Inventive Steel 12 | 0.053 | 0.02 | 0.20 | 0.04 | 0.008 | 0.006 | 0.003 | 0.039 | 7.0 |
| Inventive Steel 13 | 0.079 | 0.02 | 0.25 | 0.04 | 0.007 | 0.006 | 0.003 | 0.029 | 7.0 |
| Inventive Steel 14 | 0.072 | 0.02 | 0.49 | 0.04 | 0.007 | 0.006 | 0.003 | 0.037 | 4.2 |
| Inventive Steel 15 | 0.065 | 0.02 | 0.58 | 0.04 | 0.008 | 0.006 | 0.003 | 0.035 | 5.0 |
| Inventive Steel 16 | 0.061 | 0.02 | 0.54 | 0.04 | 0.007 | 0.006 | 0.003 | 0.032 | 6.0 |
| Inventive Steel 17 | 0.057 | 0.02 | 0.47 | 0.04 | 0.008 | 0.006 | 0.003 | 0.031 | 7.0 |
| Inventive Steel 18 | 0.064 | 0.02 | 0.50 | 0.04 | 0.006 | 0.006 | 0.003 | 0.029 | 8.0 |
| Inventive Steel 19 | 0.059 | 0.02 | 0.49 | 0.04 | 0.007 | 0.006 | 0.003 | 0.028 | 8.8 |
| Comparat ive Steel 1 | 0.085 | 0.02 | 0.55 | 0.04 | 0.007 | 0.006 | 0.003 | 0.035 | 7.0 |
| Comparative Steel 2 | 0.062 | 0.02 | 0.51 | 0.04 | 0.007 | 0.006 | 0.003 | 0.045 | 7.0 |
| Comparat ive Steel 3 | 0.075 | 0.02 | 0.85 | 0.04 | 0.006 | 0.006 | 0.003 | 0.038 | 7.0 |
| Comparat ive Steel 4 | 0.077 | 0.02 | 0.55 | 0.04 | 0.007 | 0.006 | 0.003 | 0.038 | 7.0 |
| Comparat ive Steel 5 | 0.060 | 0.02 | 0.54 | 0.04 | 0.007 | 0.006 | 0.003 | 0.031 | 10.7 |
| Comparat ive Steel 6 | 0.060 | 0.02 | 0.52 | 0.04 | 0.007 | 0.006 | 0.003 | 0.028 | 12.1 |
| Comparat ive Steel 7 | 0.021 | 0.02 | 0.54 | 0.04 | 0.007 | 0.006 | 0.003 | 0.028 | 7.0 |
| Comparat ive Steel 8 | 0.042 | 0.02 | 0.15 | 0.04 | 0.007 | 0.006 | 0.003 | 0.025 | 8.5 |
| Comparat ive Steel 9 | 0.057 | 0.02 | 0.05 | 0.04 | 0.007 | 0.006 | 0.003 | 0.030 | 7.0 |
| Comparat ive Steel 10 | 0.054 | 0.02 | 0.15 | 0.04 | 0.007 | 0.006 | 0.003 | 0.029 | 7.0 |
| Comparat ive Steel 11 | 0.054 | 0.02 | 0.49 | 0.04 | 0.007 | 0.006 | 0.003 | 0.012 | 7.0 |
| Comparat ive Steel 12 | 0.055 | 0.02 | 0.51 | 0.04 | 0.007 | 0.006 | 0.003 | 0.021 | 7.0 |
| Comparat ive Steel 13 | 0.050 | 0.02 | 0.32 | 0.04 | 0.006 | 0.006 | 0.003 | 0.027 | 7.0 |
| Comparat ive Steel 14 | 0.060 | 0.02 | 0.25 | 0.04 | 0.007 | 0.006 | 0.003 | 0.026 | 7.0 |
| Comparat ive Steel 15 | 0.043 | 0.02 | 0.52 | 0.04 | 0.007 | 0.006 | 0.003 | 0.021 | 7.0 |
| Comparat ive Steel 16 | 0.041 | 0.02 | 0.11 | 0.04 | 0.007 | 0.006 | 0.003 | 0.023 | 7.0 |
| Comparat ive Steel 17 | 0.060 | 0.02 | 0.50 | 0.04 | 0.006 | 0.006 | 0.003 | 0.038 | 3.0 |
| Comparat ive Steel 18 | 0.066 | 0.02 | 0.50 | 0.04 | 0.008 | 0.006 | 0.003 | 0.029 | 4.2 |
| Comparat ive Steel 19 | 0.058 | 0.02 | 0.54 | 0.04 | 0.007 | 0.007 | 0.003 | 0.027 | 5.4 |
| Comparat ive Steel 20 | 0.042 | 0.02 | 0.53 | 0.04 | 0.008 | 0.006 | 0.003 | 0.025 | 6.2 |
| Comparat ive Steel 21 | 0.075 | 0.02 | 0.53 | 0.04 | 0.007 | 0.006 | 0.003 | 0.036 | 8.5 |
| Comparat ive Steel 22 | 0.070 | 0.02 | 0.58 | 0.04 | 0.007 | 0.006 | 0.003 | 0.034 | 8.7 |
| Comparat ive Steel 23 | 0.090 | 0.02 | 0.11 | 0.04 | 0.007 | 0.006 | 0.003 | 0.045 | 10.1 |

The component reinforcement index defined by [Expression 1], the crystal grain aspect ratio defined by [Expression 2], and the composite reinforcement index defined by [Expression 3] of each steel sheet manufactured under the above conditions were measured and calculated.

The results therefor and the results of measuring the yield strength of the hot rolled steel sheets and the yield strength and elongation after maintaining the final steel sheets at 200°C for 20 minutes are shown together in the following Table 2.

Herein, the crystal grain aspect ratio may be obtained by observing and calculating the shape by each crystal grain through optical microscopic observation of a cross section in a rolling direction. In addition, the strength and elongation of the hot rolled steel sheets and the final materials were measured by a tensile test at room temperature after coil manufacture.

(Table 2)

| Classific ation | Compon ent reinforce ment index [Expressi on 1] | Crystal grain aspect ratio [Expressio n 2] | Compon ent reinforc ement index [Expres sion 3] | Yield strength of hot rolled steel sheet (MPa) | Material quality (after maintained at 200°C for 20 minutes) | |
|---|---|---|---|---|---|---|
| | | | | | Yield strength (MPa) | Elongation (%) |
| Inventive Steel 1 | 404.0 | 2.05 | 531.4 | 413.4 | 522.2 | 10.0 |
| Inventive Steel 2 | 422.0 | 2.02 | 531.9 | 421.6 | 522.5 | 9.9 |
| Inventive Steel 3 | 427.0 | 1.99 | 520.5 | 424.9 | 523.0 | 9.7 |
| Inventive Steel 4 | 446.0 | 2.01 | 550.6 | 433.1 | 548.7 | 10.3 |
| Inventive Steel 5 | 435.0 | 2.03 | 551.5 | 445.1 | 551.1 | 10.2 |
| Inventive Steel 6 | 431.5 | 2.01 | 538.1 | 430.9 | 541.1 | 10.4 |
| Inventive Steel 7 | 421.0 | 2.05 | 547.0 | 418.2 | 542.1 | 10.1 |
| Inventive Steel 8 | 414.0 | 2.02 | 525.6 | 411.0 | 523.0 | 10.0 |
| Inventive Steel 9 | 415.0 | 2.06 | 545.0 | 416.6 | 544.4 | 10.1 |
| Inventive Steel 10 | 408.0 | 2.05 | 534.9 | 413.2 | 524.3 | 9.9 |
| Inventive Steel 11 | 455.0 | 2.02 | 564.4 | 450.2 | 556.7 | 9.8 |
| Inventive Steel 12 | 428.0 | 2.03 | 543.0 | 434.2 | 537.9 | 10.0 |
| Inventive Steel 13 | 409.0 | 2.05 | 533.6 | 416.7 | 537.4 | 10.2 |
| Inventive Steel 14 | 466.0 | 1.92 | 524.8 | 468.2 | 517.2 | 12.9 |
| Inventive Steel 15 | 458.0 | 1.95 | 535.3 | 448.1 | 543.0 | 12.6 |
| Inventive Steel 16 | 435.0 | 1.99 | 530.8 | 423.9 | 541.4 | 11.5 |
| Inventive Steel 17 | 419.0 | 2.05 | 544.8 | 416.7 | 536.2 | 10.4 |
| Inventive Steel 18 | 419.0 | 2.02 | 530.3 | 417.0 | 530.6 | 9.0 |
| Inventive Steel 19 | 408.0 | 2.07 | 543.7 | 410.5 | 542.5 | 8.2 |
| Compara tive Steel 1 | 475.0 | 2.05 | 598.7 | 475.3 | 599.5 | 9.7 |
| Compara tive Steel 2 | 498.0 | 2.03 | 613.4 | 493.5 | 603.4 | 10.3 |
| Compara tive Steel 3 | 510.0 | 2.02 | 619.5 | 514.6 | 609.9 | 9.9 |
| Compara tive Steel 4 | 482.0 | 2.04 | 601.1 | 483.8 | 605.2 | 10.0 |
| Compara tive Steel 5 | 429.0 | 2.19 | 624.0 | 437.9 | 613.1 | 6.5 |
| Compara tive Steel 6 | 412.0 | 2.23 | 625.6 | 402.2 | 629.4 | 4.9 |
| Compara tive Steel 7 | 375.0 | 2.04 | 496.9 | 373.4 | 492.8 | 10.5 |
| Compara tive Steel 8 | 342.0 | 2.10 | 492.4 | 343.4 | 489.0 | 8.2 |
| Compara tive Steel 9 | 372.0 | 2.00 | 470.1 | 370.5 | 461.1 | 9.8 |
| Compara tive Steel 10 | 374.0 | 1.99 | 468.9 | 372.9 | 468.9 | 10.4 |
| Comparative Steel 11 | 323.0 | 1.99 | 419.4 | 320.7 | 426.2 | 10.4 |

(continued)

| Classific ation | Compon ent reinforce ment index [Expressi on 1] | Crystal grain aspect ratio [Expressio n 2] | Compon ent reinforc ement index [Expres sion 3] | Yield strength of hot rolled steel sheet (MPa) | Material quality (after maintained at 200°C for 20 minutes) | |
|---|---|---|---|---|---|---|
| | | | | | Yield strength (MPa) | Elongation (%) |
| Compara tive Steel 12 | 371.0 | 2.01 | 478.1 | 377.9 | 469.9 | 10.4 |
| Compara tive Steel 13 | 377.0 | 2.01 | 479.5 | 388.2 | 478.1 | 10.4 |
| Compara tive Steel 14 | 375.0 | 2.01 | 479.6 | 375.3 | 485.9 | 10.3 |
| Compara tive Steel 15 | 360.0 | 2.00 | 461.0 | 353.7 | 456.0 | 9.9 |
| Compara tive Steel 16 | 327.0 | 2.05 | 453.6 | 317.3 | 445.8 | 10.0 |
| Compara tive Steel 17 | 460.0 | 1.83 | 472.8 | 465.1 | 480.0 | 13.7 |
| Compara tive Steel 18 | 421.0 | 1.91 | 476.9 | 415.5 | 477.5 | 12.7 |
| Compara tive Steel 19 | 407.0 | 1.97 | 494.5 | 414.6 | 488.2 | 11.4 |
| Compara tive Steel 20 | 380.0 | 2.01 | 486.5 | 391.2 | 486.5 | 10.3 |
| Compara tive Steel 21 | 468.0 | 2.11 | 623.9 | 460.3 | 624.8 | 8.7 |
| Compara tive Steel 22 | 458.0 | 2.09 | 604.8 | 450.4 | 603.3 | 8.3 |
| Compara tive Steel 23 | 486.0 | 2.16 | 664.2 | 489.7 | 670.8 | 6.9 |

As seen in Table 2, since Inventive Steels 1 to 19 met all of the component contents suggested in the present disclosure, the component reinforcement index of [Expression 1], the crystal grain aspect ratio of [Expression 2], and the composite reinforcement index of [Expression 3], and the yield strength of the hot rolled steel sheets was 470 MPa or less, there was no problem in productivity in going through each detailed manufacturing process including cold rolling.

In addition, since Inventive Steels 1 to 19 had the yield strength of 500 to 600 MPa and the elongation of 8% or more after heat treating the final material at 200°C for 20 minutes, it was shown that the high strength and elongation according to an exemplary embodiment of the present disclosure were high and high workability was secured.

Meanwhile, Inventive Steels 1 to 13 showed that though the contents of C, Mn, and Nb were changed, the component reinforcement index of [Expression 1] was controlled to 470 or less, and as a result, good hot rolled strength and final material quality were obtained.

Further, Inventive Steels 14 and 15 had high component reinforcement indexes of [Expression 1] close to 470, but had low secondary reduction rates of 4.2 and 5.0, and thus, also had low crystal grain aspect ratios of [Expression 2] of 1.92 and 1.95. Thus, it was shown that they were able to secure an appropriate level of the composite reinforcement indexes of [Expression 3]. As a result, it was confirmed that Inventive Steels 14 and 15 also secured an appropriate level of final material quality.

However, Inventive Steels 18 and 19 contrasting therewith showed that when the component reinforcement indexes of [Expression 1] were controlled relatively low to 419 and 408, the secondary rolling reduction rates were increased to 8.0 and 8.8 to increase the crystal grain aspect ratios of [Expression 2] to 2.02 and 2.07. As such, it is shown that even though the component reinforcement index of [Expression 1] is relatively low, when the secondary rolling reduction rate is increased to a controllable range, the value of [Expression 3] which is a good level of the composite reinforcement index and an appropriate level of final material quality may be secured.

From the experimental results of Inventive Steels 14 to 19, it is shown that when the component reinforcement index of [Expression 1] and the crystal grain aspect ratio of [Expression 2] are well controlled appropriately and harmoniously, a similar composite index may be obtained, but when the crystal grain aspect ratio is high, elongation tends to decrease, and thus, in order to secure high elongation, it is more preferred to control the component reinforcement index of [Expression 1] to be high and the crystal grain aspect ratio of [Expression 2] to be low.

Meanwhile, Comparative Steels 1 to 4 had the component reinforcement index of [Expression 1] of more than 470 and the yield strength of the hot rolled steel sheet of more than 470 MPa, and thus, had poor cold rollability.

Further, in Comparative Steels 1 to 3, some of C, Mn, and Nb were above the upper limit and exceeded the standard of the component reinforcement index value of [Expression 1], and in Comparative Steel 4, the content of each component met an appropriate range, but exceeded the component reinforcement index value of [Expression 1], and thus, it was shown that the yield strength of the hot rolled steel sheet was excessively high. Herein, when the yield strength of the hot rolled steel sheet was high, the secondary rolling reduction rate was able to be set low, which was favorable for securing elongation, but greatly reduced productivity during cold rolling.

Therefore, an exemplary embodiment of the present disclosure showed that when the yield strength of the hot rolled steel sheet was more than 470 MPa, productivity of cold rolling was poor.

Further, it was shown that Comparative Steels 5 and 6 had the secondary rolling reduction rate of more than 10%, and thus, had the crystal grain aspect ratio of [Expression 2] of more than 2.15 and the elongation of less than 8%. In addition, it was shown that Comparative Steels 5 and 6 had the composite reinforcement index of [Expression 3] of more than 600 though the component reinforcement index of [Expression 1] was appropriately controlled to 470 or less, and thus, had the yield strength of more than 600 MPa. This shows that when the secondary rolling reduction rate is excessively high, the yield strength is exceeded and the elongation is insufficient.

Meanwhile, Comparative Steels 7 to 20 showed that both the component reinforcement index of [Expression 1] and the crystal grain aspect ratio of [Expression 2] met the standards suggested in an exemplary embodiment of the present disclosure, but the composite reinforcement index of [Expression 3] was less than 500, which was below the suggested standard.

For this reason, it was shown that since the strength of the hot rolled steel sheet was 470 MPa or less, the cold rollability was good, but the yield strength of the final material was less than 500, which was below the yield strength of the suggested target value.

As compared with the inventive steels according to an exemplary embodiment of the present disclosure, Comparative Steels 7 to 16 had lower component reinforcement indexes of [Expression 1] and Comparative Steels 17 to 20 had lower secondary rolling reduction rates. Further, when the component reinforcement index of [Expression 1] was low, there was no problem in the cold rollability, and when the secondary rolling reduction rate was low, the crystal grain aspect ratio of [Expression 2] was low, so that high elongation was secured, but the composite reinforcement index of [Expression 3] was below the suggested standard, and thus, it was shown that the strengthening effect sufficient to obtain the final yield strength was not able to be secured.

Further, in Comparative Steels 21 and 22, the component reinforcement index of [Expression 1] and the crystal grain aspect ratio of [Expression 2] met the suggested standard, but the composite reinforcement index of [Expression 3] was high and the yield strength was more than 600 MPa. When the yield strength is excessively high as such, a lot of force should be applied during molding, and thus, problems such as device load and mold wear may arise. Therefore, in this case, they were inappropriate for use as a steel sheet for cans.

In Comparative Steel 23, the component reinforcement index of [Expression 1] and the crystal grain aspect ratio of [Expression 2] exceeded the suggested standard, and in this case, since the composite reinforcement index of [Expression 2] exceeded the suggested standard, the steel was inappropriate for use for the same reason. Besides, it was confirmed that Comparative Steel 23 had poor cold rollability due to its excessively high strength of the hot rolled steel sheet, exceeded the crystal grain aspect ratio of [Expression 2] due to its high secondary rolling reduction rate, and also, had the final elongation below the suggested standard.

The present disclosure is not limited by the exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

## Claims

1. A cold-rolled steel sheet having excellent strength and elongation comprising, by weight: 0.04 to 0.08% of C; 0.05% or less (excluding 0%) of Si; 0.1 to 0.6% of Mn; 0.02 to 0.06% of Al; 0.015% or less (excluding 0%) of P; 0.015% or less (excluding 0%) of S; 0.006% or less (excluding 0%) of N; 0.02 to 0.04% of Nb; and the remainder of Fe and other inevitable impurities,

    wherein the cold-rolled steel sheet has a component reinforcement index defined by the following [Expression 1] of 470 or less,
    a crystal grain aspect ratio defined by the following [Expression 2] of 2.15 or less, and
    a composite reinforcement index defined by the following [Expression 3] of 500 to 600:

    Component reinforcement index = 160 + 1,000C + 100Mn + 5,000Nb       [Expression 1]:

wherein C, Mn, and Nb denote wt% of each component, Crystal grain aspect ratio = average value of [(crystal grain major axis length) /(crystal grain minor axis length)]     [Expression 2]:

Composite reinforcement index = [Expression 1] + ([Expression 2] - 1.8) × 600.     [Expression 3]:

2. The cold-rolled steel sheet having excellent strength and elongation of claim 1, wherein:
the cold-rolled steel sheet has a yield strength of 500 to 600 MPa.

3. The cold-rolled steel sheet having excellent strength and elongation of claim 1, wherein:
the cold-rolled steel sheet has an elongation of 8% of more.

4. A plated steel sheet comprising the cold-rolled steel sheet of claim 1 and a plating layer disposed on one or both surfaces of the cold-rolled steel sheet.

5. The plated steel sheet of claim 4, wherein:
the plated steel sheet is plated with tin, a tin alloy, or chromium at a thickness of 5 $\mu$m or less.

6. A method for manufacturing a cold-rolled steel sheet having excellent strength and elongation, the method comprising:

slab preparation of preparing a slab which includes, by weight: 0.04 to 0.08% of C; 0.05% or less (excluding 0%) of Si; 0.1 to 0.6% of Mn; 0.02 to 0.06% of Al; 0.015% or less (excluding 0%) of P; 0.015% or less (excluding 0%) of S; 0.006% or less (excluding 0%) of N; 0.02 to 0.04% of Nb; and the remainder of Fe and other inevitable impurities, and has a component reinforcement index defined by the following [Expression 1] of 470 or less and reheating the slab;
hot rolling the slab and finish hot rolling the slab at Ar3 or higher to manufacture a hot rolled steel sheet;
winding the hot rolled steel sheet at 560 to 700°C;
cold rolling the wound hot rolled steel sheet at a reduction rate of 80 to 95% to manufacture a cold-rolled steel sheet;
annealing the cold-rolled steel sheet at a temperature of 720 to 800°C; and
secondary rolling the annealed cold-rolled steel sheet:

Component reinforcement index = 160 + 1,000C + 100Mn + 5,000Nb     [Expression 1]:

wherein C, Mn, and Nb denote wt% of each component.

7. The method for manufacturing a cold-rolled steel sheet having excellent strength and elongation of claim 6, wherein:
in the slab preparation, the slab is heated at 1,150°C or higher.

8. The method for manufacturing a cold-rolled steel sheet having excellent strength and elongation of claim 6, wherein:
the secondary rolling is performed at a reduction rate of 4 to 10%.

9. The method for manufacturing a cold-rolled steel sheet having excellent strength and elongation of claim 6, wherein:
the cold-rolled steel sheet after the secondary rolling has a crystal grain aspect ratio defined by the following [Expression 2] of 2.15 or less:

Crystal grain aspect ratio = average value of [(crystal grain major axis length)/(crystal grain minor axis length)].

10. The method for manufacturing a cold-rolled steel sheet having excellent strength and elongation of claim 6, wherein:

the cold-rolled steel sheet after the secondary rolling has a composite reinforcement index defined by the following [Expression 3] of 500 to 600:

Composite reinforcement index = [Expression 1] + ([Expression 2] - 1.8) $\times$ 600.                    [Expression 3]:

11. A method for manufacturing a plated steel sheet, the method comprising:

   manufacturing a cold rolled steel sheet by the method of claim 6; and further,
   performing hot-dip plating or electroplating on one or both surface of the cold-rolled steel sheet to form a plating layer.

12. The method for manufacturing a plated steel sheet of claim 11, wherein:
   the forming of a plating layer is plating any one or more of tin, a tin alloy, or chromium at a thickness of 5 $\mu$m or less.

## INTERNATIONAL SEARCH REPORT

| International application No. |
| --- |
| **PCT/KR2022/020758** |

**A. CLASSIFICATION OF SUBJECT MATTER**

**C22C 38/04**(2006.01)i; **C22C 38/06**(2006.01)i; **C22C 38/02**(2006.01)i; **C22C 38/12**(2006.01)i; **C22C 38/00**(2006.01)i; **C21D 8/02**(2006.01)i; **C23C 2/06**(2006.01)i

According to International Patent Classification (IPC) or to both national classification and IPC

**B. FIELDS SEARCHED**

Minimum documentation searched (classification system followed by classification symbols)

C22C 38/04(2006.01); C21D 8/02(2006.01); C22C 38/00(2006.01); C23C 28/00(2006.01); C25D 5/12(2006.01); C25D 5/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉연강판(cold rolled steel plate), 강도(strength), 연신율(elongation), 도금(plating), 2차 압연(secondary rolling)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2000-0034959 A (KAWASAKI STEEL CORPORATION) 26 June 2000 (2000-06-26) See paragraphs [0065]-[0081]; and claims 1-2. | 1-4,6-10 |
| Y | | 5,11-12 |
| Y | KR 10-2002-0072646 A (KOREA INSTITUTE OF MACHINERY & MATERIALS) 18 September 2002 (2002-09-18) See paragraphs [0020]-[0021]. | 5,11-12 |
| A | JP 2007-291457 A (NIKKO KINZOKU K.K.) 08 November 2007 (2007-11-08) See claim 6. | 1-12 |
| A | KR 10-2003-0035697 A (POSCO) 09 May 2003 (2003-05-09) See claim 1. | 1-12 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 March 2023** | **24 March 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020758**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2013-0002419 A (HYUNDAI STEEL COMPANY) 08 January 2013 (2013-01-08) See paragraphs [0005]-[0011]. | 1-12 |

Form PCT/ISA/210 (second sheet) (July 2022)

<div style="text-align:center">

**INTERNATIONAL SEARCH REPORT**
**Information on patent family members**

</div>

International application No.

**PCT/KR2022/020758**

| Patent document cited in search report | | | Publication date (day/month/year) | Patent family member(s) | | | Publication date (day/month/year) |
|---|---|---|---|---|---|---|---|
| KR | 10-2000-0034959 | A | 26 June 2000 | AU | 1999-60637 | A1 | 01 June 2000 |
| | | | | AU | 1999-60637 | B2 | 01 April 2004 |
| | | | | CN | 1254767 | A | 31 May 2000 |
| | | | | CN | 1254767 | C | 31 May 2000 |
| | | | | EP | 1006203 | A1 | 07 June 2000 |
| | | | | EP | 1006203 | B1 | 30 July 2003 |
| | | | | JP | 2000-158888 | A | 13 June 2000 |
| | | | | JP | 2000-160289 | A | 13 June 2000 |
| | | | | JP | 3931455 | B2 | 13 June 2007 |
| | | | | KR | 10-0605835 | B1 | 31 July 2006 |
| | | | | TW | 424006 | B | 01 March 2001 |
| | | | | US | 6171416 | B1 | 09 January 2001 |
| KR | 10-2002-0072646 | A | 18 September 2002 | KR | 10-0389959 | B1 | 02 July 2003 |
| JP | 2007-291457 | A | 08 November 2007 | CN | 101426961 | A | 06 May 2009 |
| | | | | CN | 101426961 | B | 23 February 2011 |
| | | | | JP | 4522970 | B2 | 11 August 2010 |
| | | | | KR | 10-1058763 | B1 | 24 August 2011 |
| | | | | KR | 10-2009-0006084 | A | 14 January 2009 |
| | | | | US | 2009-0092851 | A1 | 09 April 2009 |
| | | | | US | 8524376 | B2 | 03 September 2013 |
| | | | | WO | 2007-126010 | A1 | 08 November 2007 |
| KR | 10-2003-0035697 | A | 09 May 2003 | None | | | |
| KR | 10-2013-0002419 | A | 08 January 2013 | None | | | |

Form PCT/ISA/210 (patent family annex) (July 2022)